(19) Europäisches Patentamt / European Patent Office / Office européen des brevets

(11) **EP 4 711 986 A1**

(12) **EUROPEAN PATENT APPLICATION**
published in accordance with Art. 153(4) EPC

(43) Date of publication:
**18.03.2026 Bulletin 2026/12**

(21) Application number: **24818292.5**

(22) Date of filing: **29.02.2024**

(51) International Patent Classification (IPC):
*G06N 5/048* (2023.01)

(52) Cooperative Patent Classification (CPC):
**G06F 21/60; G06N 5/048**

(86) International application number:
**PCT/CN2024/079441**

(87) International publication number:
**WO 2024/250755 (12.12.2024 Gazette 2024/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.06.2023 CN 202310680368**
**15.08.2023 CN 202311028735**

(71) Applicant: **Huawei Cloud Computing Technologies Co., Ltd.**
**Guiyang, Guizhou, 550025 (CN)**

(72) Inventor: **LIU, Jizhe**
**Guiyang, Guizhou 550025 (CN)**

(74) Representative: **Gill Jennings & Every LLP**
**The Broadgate Tower**
**20 Primrose Street**
**London EC2A 2ES (GB)**

(54) **MODEL INFERENCE METHOD AND DEVICE**

(57)    A model inference method and apparatus are disclosed, and relates to the field of machine learning technologies. A client and a server use respective deployed models to process different parts of user data, to obtain respective output results. In addition, the client obtains the output result of the server, and obtains an inference result based on the output results of the server and the client. Compared with a case in which the server needs to obtain all the user data in an inference process, in this application, the server obtains only a part of the user data. As the server cannot obtain, based on the part of the user data, all content included in the user data, security of the user data is ensured. In addition, the client needs to send only the part of the user data to the server, so that a bandwidth resource occupied by data transmission between the client and the server and time consumed by the transmission can be reduced, and inference efficiency can be improved.

FIG. 3

## Description

This application claims priority to Chinese Patent Application No. 202310680368.6, filed with the China National Intellectual Property Administration on June 8, 2023 and entitled "MODEL INTERACTION METHOD AND MODEL MANAGEMENT PLATFORM BASED ON SECURE MULTI-PARTY COMPUTATION TECHNOLOGY", and this application further claims priority to Chinese Patent Application No. 202311028735.0, filed with the China National Intellectual Property Administration on August 15, 2023 and entitled "MODEL INFERENCE METHOD AND APPARATUS", both of which are incorporated herein by reference in their entireties.

## TECHNICAL FIELD

This application relates to the field of machine learning technologies, and in particular, to a model inference method and apparatus.

## BACKGROUND

A neural network (neural network) model can be used to predict and infer text, an image, speech, multi-modality, and the like. A processing device divides the neural network model into different parts, and deploys the parts to a server and a client. The server and the client use respective models to process user data and obtain output results. The server and the client exchange the respective output results to implement data prediction and inference. In a process of predicting and inferring data by using the foregoing method, the server needs to obtain the user data. Consequently, security of the user data cannot be ensured.

## SUMMARY

This application provides a model inference method and apparatus, to resolve a problem that user data is insecure during inference on a server and a client.

According to a first aspect, this application provides a model inference method. The method may be implemented by a client arranged on a terminal, and the method includes: The client obtains a first processing result. The first processing result indicates data obtained by the terminal by processing user data by using a first model, and the first model is deployed on the terminal. The client splits the first processing result to obtain first data and second data. The client receives a part of model parameters of a second model, and the client processes the first data based on the part of model parameters, to obtain a second processing result. The second model is deployed on a server. The client sends the second data to the server, and receives a third processing result sent by the server. The third processing result indicates a result of processing the second data by the server by using the second model. The client obtains an inference result based on the second processing result and the third processing result.

In this application, the client transmits partial user data (for example, the second data) to the server, and obtains an inference result based on a result (for example, the third processing result) of processing the partial user data by the server and a processing result (for example, the second processing result) of processing other partial user data (for example, the first data) by the client. When the server cannot obtain all content included in the user data, the client can still obtain a complete inference result, thereby effectively improving security of the user data in a model inference process.

In another possible implementation, the first data indicates data related to user inherent information.

The data related to the user inherent information or self-owned data may be avoided from being sent to the server. Instead, this part of data is processed on a terminal side, thereby further ensuring data security.

In another possible implementation, before sending the second data to the server, the client selects, from a plurality of preset encryption algorithms, one or more target encryption algorithms matching the second data. In addition, the client encrypts the second data based on the selected one or more target encryption algorithms, to obtain one or more groups of to-be-transmitted data. Each group of to-be-transmitted data includes a cipher key corresponding to a target encryption algorithm and data corresponding to the cipher key, and the data corresponding to the cipher key is a part of the second data.

In another possible implementation, before obtaining the inference result, the client sends third data to another device, and receives a fourth processing result obtained by the another device by processing the third data. The client outputs the inference result based on the second processing result, the third processing result, and the fourth processing result.

In another possible implementation, that the client obtains the first processing result includes: The client inputs the user data into the first model, to obtain the first processing result. Content described by the user data is consistent with content described by the first processing result.

In another possible implementation, the second model is a large model.

In another possible implementation, a type of the user data includes at least one or a combination of text, image, audio, and video.

According to a second aspect, this application provides another model inference method. The method includes: A client obtains a first processing result. The first processing result indicates data obtained, by a terminal on which the client is located, by processing user data by using a first model, and the first model is deployed on the terminal on which the client is located. The client splits the first processing result to obtain first data and second data. A server sends a part of model parameters of a second model to the client. The second model is deployed on the server. The client receives the part of model parameters, and processes the first data based on the part of model parameters, to obtain a second processing result. The client sends the second data to the server, and receives a third processing result sent by the server. The third processing result indicates a result of processing the second data by the server by using the second model. The client obtains an inference result based on the second processing result and the third processing result.

In this application, the client and the server process different parts of the user data, to obtain the respective output results. In addition, the client obtains the output result of the server, and obtains the inference result based on the output results of the server and the client. Compared with a case in which the server needs to obtain all the user data in an inference process, in this application, the server obtains only a part of the user data. As the server cannot obtain, based on the part of the user data, all content included in the user data, security of the user data is ensured. In addition, the client needs to send only the part of the user data to the server, so that a bandwidth resource occupied by data transmission between the client and the server and time consumed by the transmission can be reduced, and model inference efficiency can be improved.

According to a third aspect, this application provides a model inference apparatus. The apparatus includes modules configured to implement the method in the first aspect or any possible design of the first aspect, and/or modules configured to implement the method in the second aspect.

According to a fourth aspect, this application provides a computing device cluster. The computing device cluster includes at least one computing device. Each computing device includes a processor and a memory. The processor of the at least one computing device is configured to implement instructions stored in a memory of the at least one computing device, to enable the computing device cluster to implement the operation steps of the method in the first aspect or any possible design of the first aspect, or enable the computing device cluster to implement the operation steps of the method in any possible design of the second aspect.

According to a fifth aspect, this application provides a computer-readable storage medium. The computer-readable storage medium stores computer program instructions. When the computer program instructions are run in a computing device cluster, the computing device cluster is enabled to implement the operation steps of the method in the first aspect or any possible implementation of the first aspect, or the computing device cluster is enabled to implement the operation steps of the method in the second aspect.

According to a sixth aspect, this application provides a computer program product including instructions. When the instructions are run by a computing device cluster, the computing device cluster is enabled to implement the operation steps of the method in the first aspect or any possible implementation of the first aspect, or a computer is enabled to implement the operation steps of the method in the second aspect.

According to a seventh aspect, this application provides a chip system. The chip system includes a processor, configured to implement a function of the client in the method in the first aspect, and/or configured to implement a function of the server in the method in the second aspect. In a possible design, the chip system further includes a memory, configured to store program instructions and/or data. The chip system may include a chip, or may include a chip and another discrete component.

For beneficial effects of the foregoing third aspect to the seventh aspect, refer to the descriptions of the first aspect or any implementation of the first aspect, or the descriptions of the second aspect or any implementation of the second aspect. Details are not described herein again. In this application, based on the implementations according to the foregoing aspects, the implementations may be further combined to provide more implementations.

**BRIEF DESCRIPTION OF DRAWINGS**

FIG. 1 is a diagram of a structure of a neural network;
FIG. 2 is a diagram of a structure of a model inference system according to this application;
FIG. 3 is a schematic flowchart of a first model inference method according to this application;
FIG. 4 is a diagram of obtaining a first processing result according to this application;
FIG. 5 is a schematic flowchart of encryption by using a triplet according to this application;
FIG. 6A is a schematic flowchart of encryption of second data according to this application;
FIG. 6B is another schematic flowchart of encryption of second data according to this application;

FIG. 7 is a schematic flowchart of a second model inference method according to this application;

FIG. 8 is a schematic flowchart of a third model inference method according to this application;

FIG. 9 is a schematic flowchart of a fourth model inference method according to this application;

FIG. 10 is a diagram of a structure of a first model inference apparatus according to this application;

FIG. 11 is a diagram of a structure of a computing device according to this application;

FIG. 12 is a diagram of a structure of a computing device cluster according to this application; and

FIG. 13 is a diagram of a possible connection manner of a computing device cluster according to this application.

## DESCRIPTION OF EMBODIMENTS

Terms used in implementations of this application are merely used to explain specific embodiments of this application, but are not intended to limit this application. For clear and brief description of the following embodiments, brief description of related technologies of related terms is first provided.

(1) Large model

A large model (large model) is a deep neural network model with millions or billions of parameters.

(2) Neural network

A neural network may include neurons, and the neuron may be an operation unit using $x_s$ and an intercept 1 as inputs. An output of the operation unit satisfies the following Formula (1).

$$h_{W,x}(x) = f(W^T x) = f\left(\sum_{S=1}^{n} W_S x_S + b^T\right) \text{ Formula (1)}$$

s=1, 2, ..., n, where n is a natural number greater than 1, $W_s$ is a weight of $x_s$, and b is a bias of the neuron. f is an activation function (activation function) of the neuron, and is used to introduce a non-linear feature into the neural network, to convert an input signal in the neuron into an output signal. The output signal of the activation function may be used as an input of a next layer. The neural network is a network formed by connecting a plurality of the foregoing single neurons. The weight represents connection strength between different neurons, and determines impact of the input on the output.

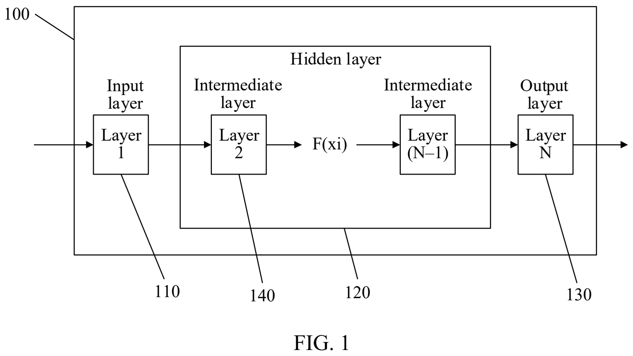

FIG. 1 is a diagram of a structure of a neural network. As shown in FIG. 1, the neural network 100 includes X processing layers, where X is an integer greater than or equal to 3. A first layer of the neural network 100 is an input layer 110, and is responsible for receiving an input signal. A last layer of the neural network 100 is an output layer 130, and is responsible for outputting a processing result of the neural network. Layers other than the first layer and the last layer are intermediate layers 140. These intermediate layers 140 together form a hidden layer 120, and each intermediate layer 140 in the hidden layer 120 may receive an input signal and output a signal. The hidden layer 120 is responsible for processing the input signal. Each layer represents a logical level of signal processing. Through a plurality of layers, multi-level logic processing may be performed on a data signal.

Based on brief descriptions of some concepts that may be used in this application, the following describes implementations of this application with reference to the accompanying drawings.

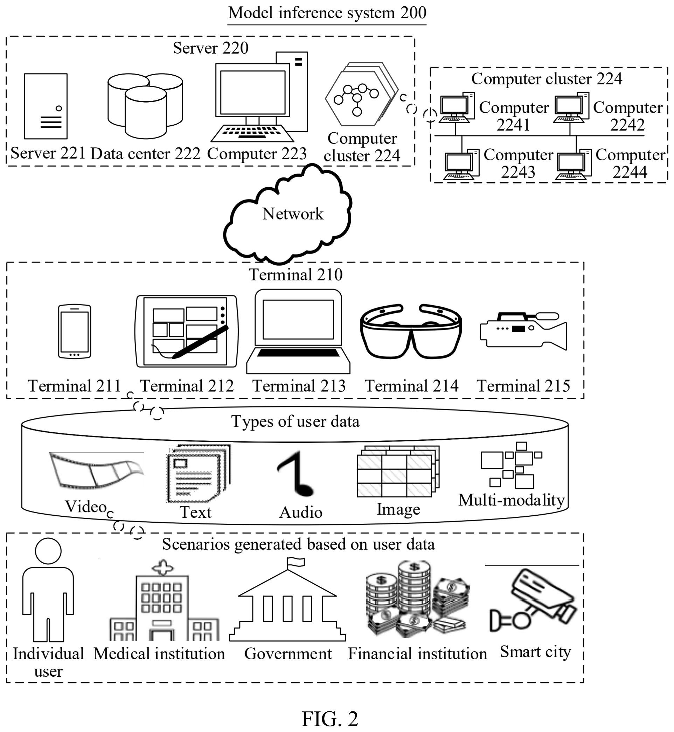

FIG. 2 is a diagram of a structure of a model inference system according to this application. As shown in FIG. 2, the model inference system 200 includes: a terminal 210, a server 220, and a network. The network may implement a function of data transmission between the terminal 210 and the server 220. The network may include one or more network devices, and the network device may be a router, a switch, or the like.

The terminal 210 is configured to obtain to-be-inferred data, and cooperate with the server 220, to obtain an inference result based on the to-be-inferred data. A client may be installed on the terminal 210, and the terminal 210 exchanges data with the server 220 via the client. The client may be an application (application) that has data receiving, sending, and processing functions, for example, an agent (agent).

A network model may be deployed on the terminal 210, so that the terminal 210 collaborates with the server 220 to obtain the inference result. The network model may include, but is not limited to, a convolutional neural network (convolutional neural network, CNN) model, a deep convolutional neural network (deep convolutional neural network, DCNN) model, a Hopfield network (Hop field network, HN) model, a feedforward neural network (FFNN) model, a BP neural network model, a natural language network model (Transformer or BERT), and the like.

The terminal 210 may be, but is not limited to, user equipment, a mobile station, a mobile terminal, or the like. The terminal may be a mobile phone (a terminal 211 shown in FIG. 2), a tablet computer (a terminal 212 shown in FIG. 2), a computer with a wireless transceiver function (a terminal 213 shown in FIG. 2), a virtual reality (virtual reality, VR) device (a terminal 214 shown in FIG. 2), an augmented reality (augmented reality, AR) device, a monitoring device (a terminal 215 shown in FIG. 2) in industrial control (industrial control), a smart home (smart home), or a smart city (smart city), or the like.

A data type of the to-be-inferred data may be text, image, audio, video, multi-modality, or the like. The to-be-inferred data may be from different scenarios, for example, may be from an individual user, a medical institution, a financial institution, a government, a smart city, or computer synthesis. The to-be-inferred data may be stored in the terminal 210 in advance, or may be generated in real time in a running process of the terminal 210, or may be transmitted by another device. When the to-be-inferred data is stored in the terminal 210 in advance, the terminal 210 may include a memory. The memory may be a cache, a solid state drive (solid state drive, SSD), a hard disk drive (hard disk drive, HDD), a storage class memory (storage class memory, SCM), or an internal memory or another storage medium, for example, a storage particle that stores a specific quantity of bits, such as a single level cell (single level cell, SLC), a multi-level cell (multi-level cell, MLC), a triple-level cell (triple-level cell, TLC), or a quad-level cell (quad-level cell, QLC).

The server 220 is configured to cooperate with the terminal 210 to obtain the inference result. A network model may be deployed on the server 220, so that the server 220 cooperates with the terminal 210 to obtain the inference result. The network model may be a large model, or may be a general-purpose network model, for example, a convolutional neural network (convolutional neural network, CNN) model. The server 220 may be, but is not limited to: a server 221, a data center 222, a computer 223, a computer cluster 224, or the like. The following describes cases in which the server 220 is the foregoing device.

In a first possible case, the server 220 is the server 221. The server 221 may be arranged on a device side, or may be arranged on a cloud side.

In a second possible case, the server 220 is the data center 222. The data center 222 may include one or more physical devices having a computing function, such as a server, a mobile phone, or a tablet computer. When the data center 222 includes a plurality of physical devices having the computing function, the plurality of physical devices may be arranged at a same physical location, or may be arranged at different physical locations. When the plurality of physical devices having the computing function are arranged at different physical locations, the network may be used to implement data exchange between physical devices. For related descriptions of the network, refer to the foregoing related descriptions. Details are not described herein again.

In a third possible case, the server 220 is the computer 223. The computer 223 may include a memory, a processor, and one or more interfaces.

The processor included in the computer 223 processes data transmitted by the terminal 210 to obtain a processing result. The processor may include one or more processor cores (cores). The processor may be an ultra-large-scale integrated circuit. An operating system and another software program are installed in the processor, so that the processor can implement access to an internal memory and various peripheral component interconnect express (Peripheral Component Interconnect express, PCIe) devices. It may be understood that, in this embodiment, a core in the processor may be a central processing unit (central processing unit, CPU). The processor may alternatively be another general-purpose processor, a digital signal processor (digital signal processor, DSP), an application-specific integrated circuit (application-specific integrated circuit, ASIC), a field programmable gate array (field programmable gate array, FPGA), a graphics processing unit (graphics processing unit, GPU), an AI chip, a system-on-a-chip (system-on-a-chip, SoC) or another programmable logic device, a discrete gate or a transistor logic device, a discrete hardware component, or the like. In actual application, the computer 223 may alternatively include a plurality of processors.

The one or more interfaces included in the computer 223 may receive data transmitted by the terminal 210, and may further transmit a processing result obtained by the processor of the computer 223 to the terminal 210.

In a fourth possible case, the server 220 is the computer cluster 224.

The computer cluster 224 refers to a set of computers (computers 2241 to 2244 shown in FIG. 2) connected through a local area network or the Internet. Each computer may obtain, based on received data, content included in the data. For example, the computer cluster 224 may have a rack, and the rack may establish communication for a plurality of computers included in the computer cluster 224 through wired connection, for example, a universal serial bus (universal serial bus, USB) or a PCIe high-speed bus. The computer cluster 224 is usually configured to implement large tasks (which may also be referred to as jobs (job)). The job herein is usually a large job that requires a large quantity of resources for parallel processing. A property and a quantity of jobs are not limited in embodiments. A job may contain a plurality of computing tasks generated during model inference, and these computing tasks may be allocated to a plurality of computing resources for execution. Each computer in the computer cluster 224 uses same hardware and a same operating system, or computers in the computer cluster 224 use different hardware and different operating systems based on a service requirement.

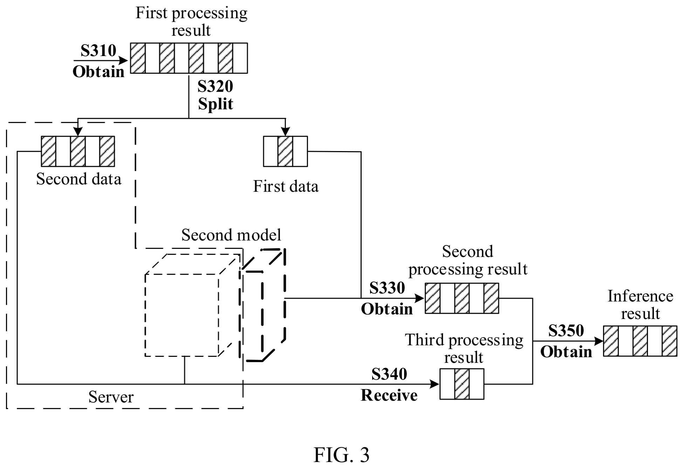

The foregoing describes the model inference system according to this application with reference to FIG. 2. The following describes a model inference method according to this application with reference to FIG. 3. FIG. 3 is a schematic flowchart of a first model inference method according to this application. The method may be executed by the client described in FIG. 2, or may be executed by the client and the terminal together, or may be executed by the client, the terminal, and the server together. The following uses an example in which the method is executed by the client for description. The method includes the following step S310 to step S350.

Step S310: The client obtains a first processing result.

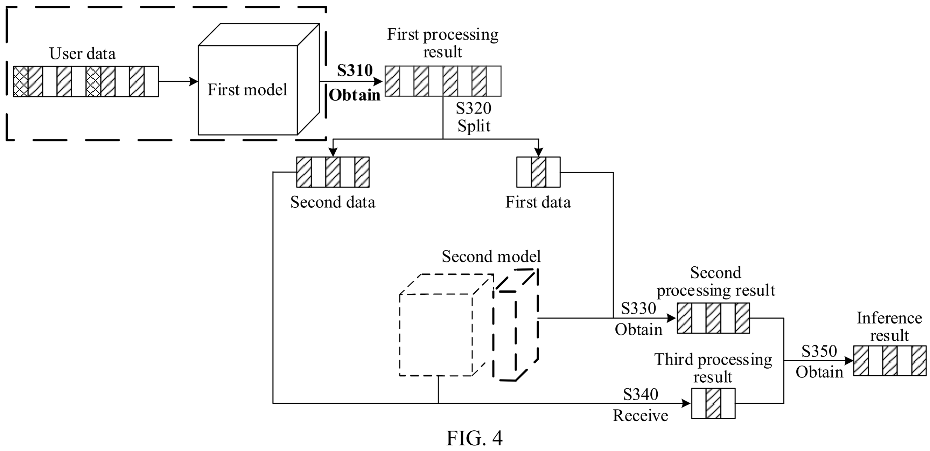

FIG. 4 is a diagram of obtaining a first processing result according to this application. As shown in FIG. 4, the first processing result indicates data obtained, by a terminal on which the client is located, by processing user data by using a first model, and the first model is deployed on the terminal.

A type of the user data may include, but is not limited to, text, image, audio, video, multi-modality, or the like. The user data may be shown in Table 1.

Table 1

| No. \ Information | Name | Gender | Residence | Age | Product review |
|---|---|---|---|---|---|
| 1 | Zhang San | Female | Beijing | 12 | The product is ellipsoidal and looks great |
| 2 | Li Si | Female | Shanghai | 35 | The product has low cost-effectiveness |
| 3 | Wang Wu | Female | Shenzhen | 26 | The product has a matcha flavor and I like it very much |
| 4 | Zhao Liu | Male | Guangxi | 53 | Components of the product fall off easily upon touch. The quality is poor |
| 5 | Sun Qi | Female | Beijing | 15 | No review |

A source of the user data may include, but is not limited to, one or more of the following possible cases.

Case 1: The user data is generated during running of the terminal, for example, text data generated during operations of a company.

Case 2: The user data is transmitted by another device. For example, another device transmits text data that is related to operations of a company and that is stored in the another device to the terminal.

Case 3: The user data is calculated and synthesized by the terminal. For example, the terminal synthesizes text data by using computing and storage resources of the terminal.

In a possible case, the terminal inputs the user data into the first model, to obtain the first processing result. Content described by the user data is consistent with content described by the first processing result.

For example, the terminal inputs the user data in Table 1 to the first model, and the first model outputs the first processing result shown in Table 2.

Table 2

| No. \ Information | Name | Gender | Residence | Age | Product review |
|---|---|---|---|---|---|
| 1 | Zhang San | Female | Beijing | 12 | Looks great |
| 2 | Li Si | Female | Shanghai | 35 | Low cost-effectiveness |
| 3 | Wang Wu | Female | Shenzhen | 26 | I like it very much |
| 4 | Zhao Liu | Male | Guangxi | 53 | Poor quality |
| 5 | Sun Qi | Female | Beijing | 15 | No review |

Step S320: The client splits the first processing result to obtain first data and second data.

In a possible case, the client may obtain, through splitting, data related to user inherent information in the first processing result as the first data and other data as the second data. For example, the client splits a first processing result x shown in Table 2 into first data x1 shown in Table 3 and second data x2 shown in Table 4.

Table 3

| No. \ Information | Name | Gender | Residence | Age |
|---|---|---|---|---|
| 1 | Zhang San | Female | Beijing | 12 |
| 2 | Li Si | Female | Shanghai | 35 |
| 3 | Wang Wu | Female | Shenzhen | 26 |
| 4 | Zhao Liu | Male | Guangxi | 53 |
| 5 | Sun Qi | Female | Beijing | 15 |

Table 4

| No. \ Information | Product review |
|---|---|
| 1 | Looks great |
| 2 | Low cost-effectiveness |
| 3 | I like it very much |
| 4 | Poor quality |

| No. \ Information | Product review |
|---|---|
| 5 | No review |

The foregoing describes the case in which the client splits the first processing result into two pieces of data (for example, the first data and the second data). In some possible examples, the client may split the first processing result into three or more pieces of data. For example, the client splits the first processing result to obtain first data, second data, and third data.

Step S330: The client receives a part of model parameters of a second model, and processes the first data based on the part of model parameters to obtain a second processing result.

The second model is deployed on the server. The second model may be a large model deployed on the server. Compared with a common model, the large model includes more model parameters, and the server processes the second data by using the large model, to obtain the second processing result. Compared with using the common model, the second data that can be obtained includes more content. Therefore, the inference result obtained through interference by using the second data better meets user expectation. In a possible case, before the client receives the part of model parameters of the second model, the server sends the part of model parameters of the second model to the client.

For example, a model 2 is deployed on the server, and the model 2 includes a model parameter set y1 and a model parameter set y2. The server sends the model parameter set y1 of the model 2 to the client. The client receives the model parameter set y1, and processes the first data x1 by using y1, to obtain the second processing result. For example, the second processing result is that among users with product purchase, women account for a greater proportion, and more users are located in first-tier cities. For example, the model 2 includes 1,000,000 model parameters, a model parameter set 1 includes 10,000 model parameters, and a model parameter set 2 includes 990,000 model parameters. The client receives the 10,000 model parameters included in the model parameter set 1 sent by the server. The client obtains the second processing result based on x2 by using the 10,000 model parameters.

In a possible case, the first model and the second model are models for a same data type. For example, the first model and the second model are models for processing text data. The first model and the second model may be from a same service providing device, or may be from different service providing devices. When the first model and the second model are from different service providing devices, the different service providing devices may be from a same vendor, or may be from different vendors. This is not limited in this application.

Step S340: The client sends the second data to the server, and receives a third processing result sent by the server.

The third processing result indicates a result of processing the second data by the server by using the second model.

For example, the model 2 is deployed on the server, and the server inputs the second data x2 into the model 2 deployed on the server. The model 2 processes the second data x2 by using the model parameter set y2, and outputs the third processing result. For example, the third processing result describes a user's review on the product. For example, the product has more positive reviews.

In a possible case, before the client sends the second data to the server, the client selects, from a plurality of preset encryption algorithms, one or more target encryption algorithms matching the second data. In addition, the client encrypts the second data based on the selected one or more target encryption algorithms, to obtain one or more groups of to-be-transmitted data, where each group of to-be-transmitted data includes a cipher key corresponding to a target encryption algorithm and data corresponding to the cipher key, and the data corresponding to the cipher key is a part of the second data. The client encrypts the second data by using an encryption method in cooperation with the second data, to avoid leakage of the second data and insecurity of the user data.

The target encryption algorithms may include, but is not limited to: a secret sharing algorithm, a differential privacy algorithm, a homomorphic encryption algorithm, a garbled circuit algorithm, and the like. The secret sharing (secret sharing) algorithm is a method for distributing, storing, and recovering a secret cipher key (or other secret information). A cipher key manager splits the secret cipher key into a series of associated secret information (referred to as sub-cipher keys) and distributes the sub-cipher keys to members in a community. In this case, by taking out respective sub-cipher keys, members in some groups (authorized sets) can recover the secret cipher key by using a specified method, while members in other groups (unauthorized sets) cannot recover the cipher key, for example, a triplet cipher key pair. The differential privacy (differential privacy) algorithm refers to. The homomorphic encryption (homomorphic encryption, HE) algorithm refers to performing a specific operation on ciphertext obtained by performing homomorphic encryption on original data, where plaintext, obtained by performing homomorphic decryption on an obtained ciphertext calculation result, is equivalent to a data result obtained by performing same calculation on original plaintext data, and is, for example, a gentry method, a BGV method, or a BFV method. The garbled circuit algorithm refers to inserting some random logic gates into a circuit to garble a circuit structure, so that an attacker hardly obtains the circuit structure through reverse engineering, thereby implementing confidentiality of the circuit structure.

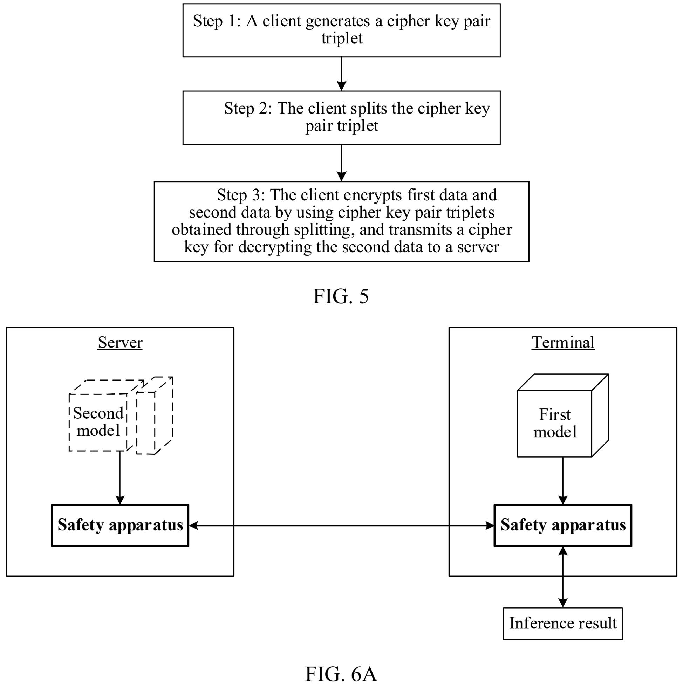

The following uses an example in which the target encryption algorithm is the triplet cipher key pair in the secret sharing algorithm to describe the foregoing process in which the client processes the second data to obtain the third processing result and the server processes the first data to obtain the second processing result. The process includes the following step 1 to step 12. FIG. 5 is a schematic flowchart of encryption by using a triplet according to this application. As shown in FIG. 5, triplet encryption includes step 1 to step 3.

Step 1: A client generates a cipher key pair triplet.

For example, the client generates a cipher key pair triplet $c=a*b$.

Step 2: The client splits the cipher key pair triplet.

For example, the client splits the cipher key pair triplet $c=a*b$ as follows: $c_1=a_1*b_1$ and $c_2=a_2*b_2$, where $c=c_1+c_2$.

Step 3: The client encrypts first data and second data by using cipher key pair triplets obtained through splitting, and transmits a cipher key for decrypting the second data to a server.

For example, the client encrypts a model parameter set y1 and first data x1 by using $c_1=a_1*b_1$, and encrypts a model parameter set y2 and second data x2 by using $c_2=a_2*b_2$, to obtain one or more groups of to-be-transmitted data. The client transmits the encrypted second data x2 and $c_2=a_2*b_2$ to the server. For more content of a triplet encryption algorithm, refer to related descriptions of a common technology. Details are not described herein again.

Step 4: The client decrypts the encrypted first data x1 by using a1 to obtain m1, and decrypts the model parameter set y1 by using b1 to obtain n1, where for example, $m_1=x_1-a_1$, and $n_1=y_1-b_1$.

Step 5: The server decrypts the encrypted second data x2 by using a2 to obtain m2, and decrypts the model parameter set y2 by using b2 to obtain n2, where for example, m2=x2-a2, and n2=y2-b2.

Step 6: The client and the server exchange m1, n1, m2, and n2.

Step 7: The client obtains m01 through calculation by using m1 and m2, and obtains n01 through calculation by using n1 and n2, where for example, m01=m1+m2, and n01=n1+n2.

Step 8: The server obtains m11 through calculation by using m1 and m2, and obtains n11 through calculation by using n1 and n2, where for example, m11=m1+m2, and n11=n1+n2.

Step 9: The client obtains r1 through calculation by using c1, a1, b1, m01, and n01, where for example, r1=c1+m01*b1+n01*a1+m01*n01.

Step 10: The server obtains r2 through calculation by using c2, a2, b2, m11, and n11, where for example, r2=c2+m11*b1+n11*a1.

Step 11: The client and the server exchange r1 and r2.

Step 12: The client obtains a second processing result by using r1 and r2, and the server obtains a third processing result by using r1 and r2.

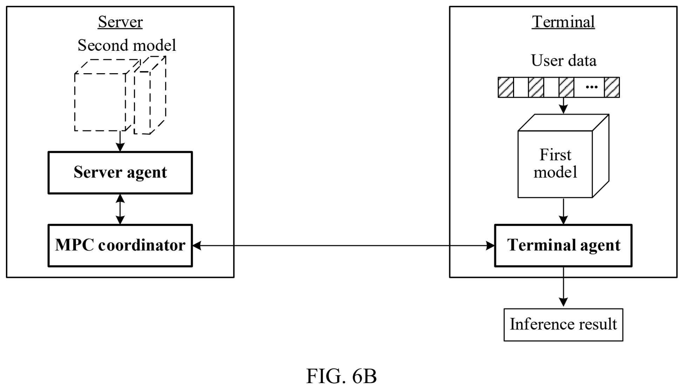

In some possible cases, the client and the server may implement an encrypted transmission process of data via a third-party apparatus. FIG. 6A is a schematic flowchart of encryption of second data according to this application. A third apparatus may be a security apparatus. FIG. 6B is another schematic flowchart of encryption of second data according to this application. A third apparatus is an agent (agent). A terminal agent is installed on a terminal, and a server agent is installed on a server. The terminal agent and the server agent are configured to implement a function of secure data transmission between the terminal and the server. The terminal agent and the server agent can be connected through a secure multi-party computation (secure multi-party computation, MPC) coordinator (coordinator). A process of encrypting second data in this manner includes the following step 1 to step 10.

Step 1: The terminal establishes a link with the MPC coordinator through the terminal agent, and the MPC coordinator starts the server agent.

Step 2: The server agent initializes a secure running environment.

Step 3: The server agent groups model parameters included in a second model into a model parameter set 1 and a model parameter set 2. The server agent sends the model parameter set 2 to the terminal agent.

Step 4: The terminal agent generates a cipher key pair triplet in the foregoing manner described in FIG. 5, splits the generated cipher key pair triplet, and transmits split cipher key pair triplets to the MPC coordinator.

Step 5: The MPC coordinator transmits the received cipher key pair triplets to the server agent.

Step 6: The server agent receives the cipher key pair triplets.

Step 7: The terminal agent splits user data into a plurality of pieces of data including first data and second data, and transmits the second data to the MPC coordinator, and the MPC coordinator transmits the second data to the server agent.

Step 8: The terminal agent obtains a second processing result based on the first data.

Step 9: The server agent obtains a third processing result based on the second data, and sends the third processing result to the MPC coordinator, and the MPC coordinator transmits the third processing result to the terminal agent.

Step 10: The terminal agent obtains an inference result based on the second processing result and the third processing result.

In a possible case, the terminal and the server may implement encrypted transmission and processing of data by using a hardware device. For example, a dedicated channel is established between the terminal and the server, to implement data transmission between the terminal and the server. For another example, a processing device is mounted on the server to process data. An encryption manner and a processing manner of the data are not limited in this application. A user may select, based on a specific requirement, a software or hardware manner to perform encrypted transmission on the data or process the data.

Step S350: The client obtains an inference result based on the second processing result and the third processing result.

For example, the client adds the foregoing second processing result and the third processing result, to obtain the inference result. The following provides two possible examples of the inference result.

For example, the inference result may be a description of user behavior. In an example, comments of most users on the product are positive.

For another example, the inference result may alternatively be a description of user requirements. In an example, customers of different ages have different requirements for a product. An older customer (for example, over 25 years old) cares more about product quality, cost-effectiveness, taste, and the like; a younger customer (for example, 25 years old or below) cares more about product appearance; more customers with product purchase are women; more customers live in first-tier cities; and the like.

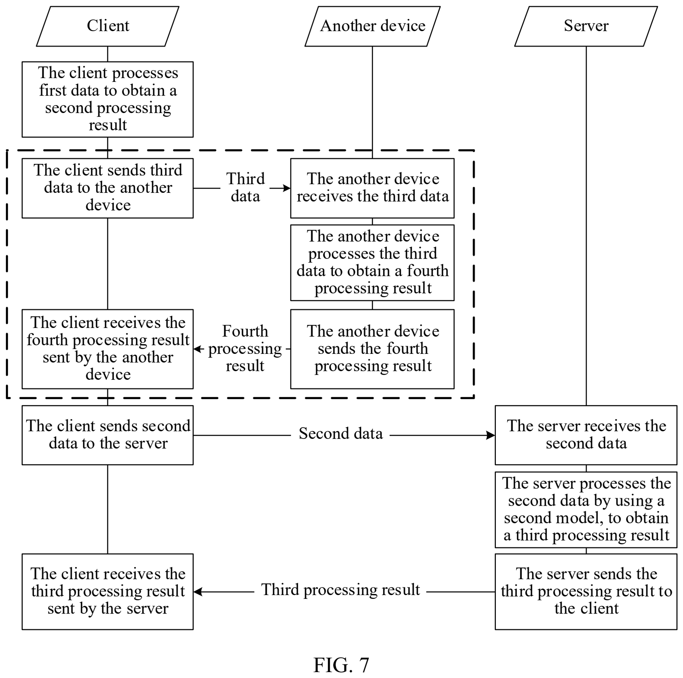

In a possible case, FIG. 7 is a schematic flowchart of a second model inference method according to this application. As shown in FIG. 7, before the client obtains the inference result, the client sends third data to another device, and receives a fourth processing result obtained by processing the third data by the another device. In addition, the client obtains the inference result based on the second processing result, the third processing result, and the fourth processing result. The another device may be a terminal, or may be a client. This is not limited in this application. In this case, the another device receives the part of model parameters that is of the second model and that is sent by the server, and processes the third data by using the part of model parameters, to obtain the fourth processing result. For example, a model 2 includes: a model parameter set y1, a model parameter set y2, and a model parameter set y3. The another device receives the model parameter set y3 sent by the server, and processes the third data by using y3, to obtain the fourth processing result. For specific content, refer to the foregoing related descriptions. Details are not described herein again.

In this application, the client transmits partial user data (for example, the second data) to the server, and obtains an inference result based on a result (for example, the third processing result) of processing the partial user data by the server and a processing result (for example, the second processing result) of processing other partial user data (for example, the first data) by the client. The server cannot obtain all content contained in the user data, and the inference result is obtained by the client, which ensures user data security.

The foregoing describes the model inference method by using an example in which the client deployed on the terminal implements the model inference method. In some possible examples, the model inference method may alternatively be implemented in the following two possible examples.

In a first possible example, the model inference method may be implemented by the terminal. In this case, different from implementation by the client, step S310 to step S350 are all implemented by the terminal.

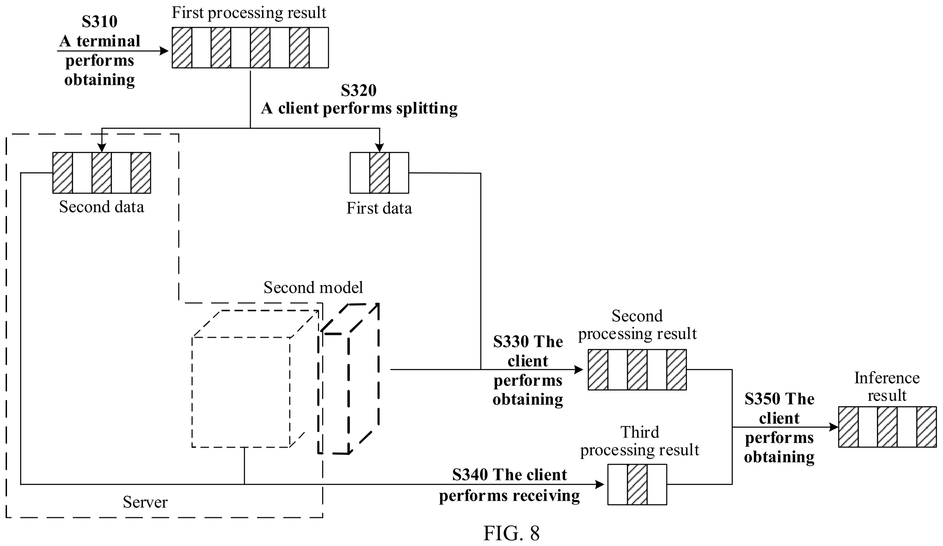

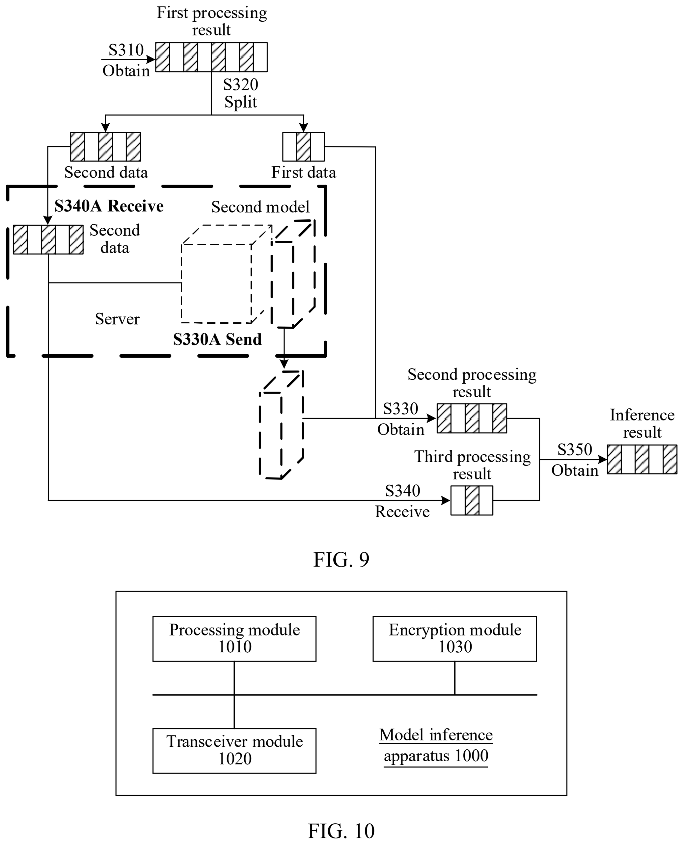

In a second possible example, the model inference method may alternatively be implemented by the terminal and the client deployed on the terminal in cooperation. FIG. 8 is a schematic flowchart of a third model inference method according to this application. As shown in FIG. 8, different from implementation by the client, step S310 is that the terminal obtains a first processing result, where the first processing result indicates data obtained by the terminal by processing user data by using a first model, and the first model is deployed on the terminal. The foregoing describes the data inference method provided in this application with reference to FIG. 3 to FIG. 8. The following describes another model inference method provided in this application with reference to FIG. 9. FIG. 9 is a schematic flowchart of a fourth model inference method according to this application. The method may be jointly implemented by a client and a server. A difference between the method and the foregoing method is that before the foregoing step S330, the method further includes step S330A in which the server sends a part of model parameters of a second model to the client. The second model is deployed on the server. In addition, before step S340 in which the client receives the third processing result sent by the server, the method further includes step S340A in which the server receives the second data, processes the second data by using the second model to obtain a third processing result, and sends the third processing result to the client. For other related content of the method, refer to the foregoing related descriptions. Details are not described herein again.

In this application, the server receives encrypted partial user data (for example, the second data), and processes the partial user data by using the second model. This reduces computing resources consumed by the client for calculating the partial user data, and time consumed by the client for obtaining the inference result, thereby improving efficiency. In addition, the partial user data received by the server is encrypted information, which ensures that the user data is obtained only by a device with user permission.

The foregoing describes the model inference method provided in this application with reference to FIG. 3 to FIG. 9. The following describes a first model apparatus provided in this application with reference to FIG. 10. FIG. 10 is a diagram of a structure of a first model inference apparatus according to this application. The apparatus 1000 includes: a processing module 1010, a transceiver module 1020, and an encryption module 1030. The apparatus 1000 may implement functions of the terminal in the method embodiments described in FIG. 3 and FIG. 4.

The transceiver module 1020 is configured to obtain a first processing result. The processing module 1010 is configured to split the first processing result to obtain first data and second data. The transceiver module 1020 is further configured to receive a part of model parameters of a second model. The processing module 1010 is further configured to process the first data based on the part of model parameters, to obtain a second processing result. The transceiver module 1020 is further configured to send the second data to a server, and receive a third processing result sent by the server. The third processing result indicates a result of processing the second data by the server by using the second model. The processing module 1010 is further configured to obtain an inference result based on the second processing result and the third processing result.

In a possible case, the transceiver module 1020 is further configured to: send third data to another device, and receive a fourth processing result obtained by the another device by processing the third data. The processing module 1010 is further configured to output the inference result based on the second processing result, the third processing result, and the fourth processing result.

In a possible case, the encryption module 1030 is configured to select, from a plurality of preset encryption algorithms, one or more target encryption algorithms matching the second data. The encryption module 1030 is further configured to encrypt the second data based on the selected one or more target encryption algorithms, to obtain one or more groups of to-be-transmitted data. Each group of to-be-transmitted data includes a cipher key corresponding to a target encryption algorithm and data corresponding to the cipher key, and the data corresponding to the cipher key is a part of the second data.

In a possible case, the second model is a large model.

In a possible case, a type of the user data includes at least one or a combination of text, image, audio, and video.

For more detailed descriptions of the foregoing processing module 1010, the transceiver module 1020, and the encryption module 1030, directly refer to related descriptions in the foregoing described method embodiments. Details are not described herein again.

The processing module 1010, the transceiver module 1020, and the encryption module 1030 may all be implemented by using software, or may be implemented by using hardware. For example, the following uses the processing module 1010 as an example, to describe an implementation of the processing module 1010. Similarly, for implementations of the transceiver module 1020 and the encryption module 1030, refer to the implementation of the processing module 1010.

A module is used as an example of a software functional unit, and the processing module 1010 may include code running on a compute instance. The compute instance may include at least one of a physical host (a computing device), a virtual machine, and a container. Further, a quantity of the foregoing compute instance may be one or more. For example, the processing module 1010 may include code running on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed in a same virtual private cloud (virtual private cloud, VPC), or may be distributed in a plurality of VPCs. Generally, one VPC is arranged in one region. A communication gateway needs to be arranged in each VPC for communication between two VPCs in a same region and cross-region communication between VPCs in different regions. The VPCs are interconnected through communication gateways.

A module is used as an example of a hardware functional unit, and the processing module 1010 may include at least one computing device, for example, a server. Alternatively, a module A may be a device or the like that is implemented by using an application-specific integrated circuit (application-specific integrated circuit, ASIC) or a programmable logic device (programmable logic device, PLD). The foregoing PLD may be implemented by using a complex programmable logical device (complex programmable logical device, CPLD), a field-programmable gate array (field-programmable gate array, FPGA), a generic array logic (generic array logic, GAL), or any combination thereof.

A plurality of computing devices included in the processing module 1010 may be distributed in a same region, or may be distributed in different regions. The plurality of computing devices included in the processing module 1010 may be distributed in a same AZ, or may be distributed in different AZs. Similarly, the plurality of computing devices included in the processing module 1010 may be distributed in a same VPC, or may be distributed in a plurality of VPCs. The plurality of computing devices may be any combination of computing devices such as a server, an ASIC, a PLD, a CPLD, an FPGA, and GAL.

It should be noted that in another embodiment, the processing module 1010 may be configured to execute any step in the model inference method, the transceiver module 1020 may be configured to execute any step in the model inference method, and the encryption module 1030 may be configured to execute any step in the model inference method. Steps implemented by the processing module 1010, the transceiver module 1020, and the encryption module 1030 may be specified as required. The processing module 1010, the transceiver module 1020, and the encryption module 1030 respectively implement different steps in the model inference method, to implement all functions of the model inference apparatus.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device like a desktop computer, a notebook computer, or a smartphone.

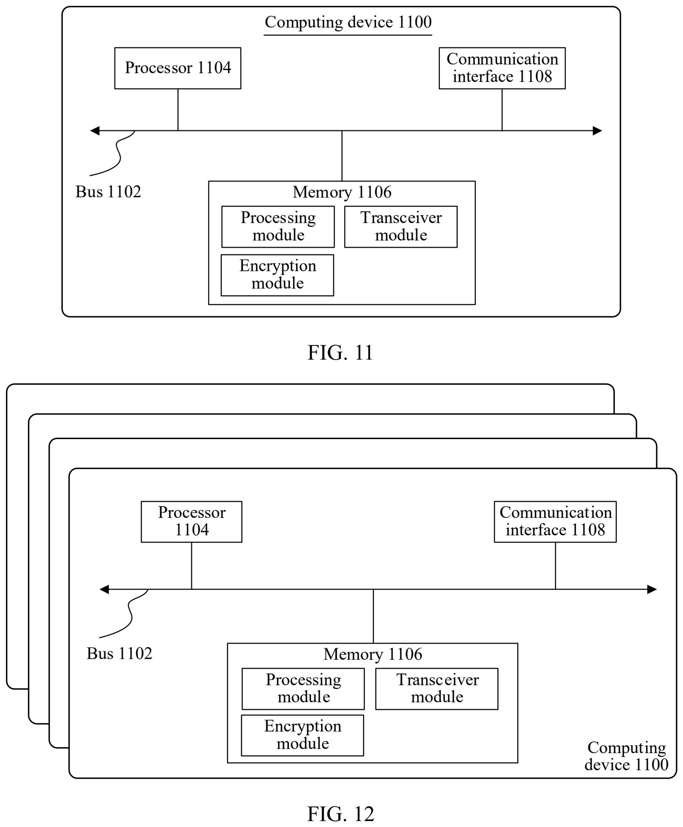

FIG. 11 is a diagram of a structure of a computing device according to this application. As shown in FIG. 11, the computing device 1100 includes: a bus 1102, a processor 1104, a memory 1106, and a communication interface 1108. The processor 1104, the memory 1106, and the communication interface 1108 communicate with each other through the bus 1102 The computing device 1100 may be a server or a terminal device. It should be understood that quantities of processors and memories in the computing device 1100 are not limited in this application.

The bus 1102 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of indication, the bus is indicated by using only one line in FIG. 11. However, it does not indicate that there is only one bus or only one type of bus. The bus 1102 may include a path for transferring information between components (for example, the memory 1106, the processor 1104, and the communication interface 1108) of the computing device 1100.

The processor 1104 may include any one or more of processors, such as a central processing unit (central processing unit, CPU), a graphics processing unit (graphics processing unit, GPU), a microprocessor (microprocessor, MP), or a digital signal processor (digital signal processor, DSP).

The memory 1106 may include a volatile memory (volatile memory), for example, a random access memory (random access memory, RAM). The processor 1104 may further include a non-volatile memory (non-volatile memory), for example, a read-only memory (read-only memory, ROM), a flash memory, a hard disk drive (hard disk drive, HDD), or a solid state drive (solid state drive, SSD).

The memory 1106 stores executable program code, and the processor 1104 executes the executable program code to separately implement functions of the processing module 1010, the transceiver module 1020, and the encryption module 1030 above, and therefore, to implement the model inference method. In other words, the memory 1106 stores instructions for implementing the model inference method.

The communication interface 1103 uses a transceiver module, for example, but not limited to, a network interface card or a transceiver, to implement communication between the computing device 1100 and another device or a communication network.

FIG. 12 is a diagram of a structure of a computing device cluster according to this application. As shown in FIG. 12, the computing device cluster includes at least one computing device 1100 described in FIG. 11. When the computing device cluster includes two computing devices, and the two computing devices are respectively a server and a terminal on which a client is deployed, the computing device cluster may constitute the model inference system described in FIG. 2. In other words, the model inference system described in FIG. 2 is a specific example of the computing device cluster shown in FIG. 12.

The memory 1106 in one or more computing devices in the computing device cluster may store same instructions for implementing the model inference method.

In some possible implementations, the memory 1106 in the one or more computing devices in the computing device cluster may alternatively separately store partial instructions for implementing the model inference method. In other words, a combination of the one or more computing devices may jointly implement the instructions for implementing the model inference method.

In some other possible implementations, memories of different computing devices in the computing device cluster may store different instructions respectively for implementing partial functions of the model inference apparatus. In other words, the instructions stored in the memories of different computing devices may implement functions of one or more modules in the processing module 1010, the transceiver module 1020, and the encryption module 1030.

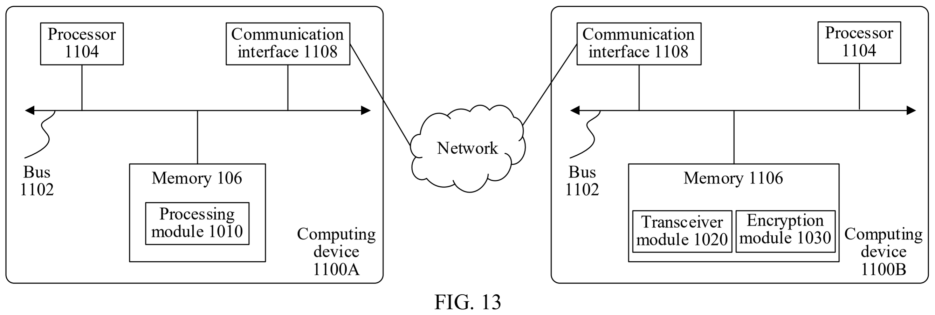

In some possible implementations, the one or more computing devices in the computing device cluster may be connected through a network. The network may be a wide area network, a local area network, or the like. FIG. 13 is a diagram of a possible connection manner of a computing device cluster according to this application. As shown in FIG. 13, two computing devices 1100A and 1100B are connected through a network. Specifically, each computing device is connected to the network through a communication interface in the computing device. In this type of possible implementation, a memory in the computing device 1100A stores instructions for implementing a function of the processing module 1010. In addition, a memory in the computing device 1100B stores instructions for implementing functions of the transceiver module 1020 and the encryption module 1030.

A reason for the connection manner of the computing device cluster shown in FIG. 13 may be as follows: In the model inference method provided in this application, a large amount of user data needs to be stored and the user data needs to be processed to obtain the first processing result, so that it is considered that the functions implemented by the transceiver module 1020 and the encryption module 1030 are executed by the computing device 1100B.

It should be understood that functions of the computing device 1100A shown in FIG. 13 may alternatively be completed by a plurality of computing devices. Similarly, functions of the computing device 1100B may alternatively be completed by a plurality of computing devices.

An embodiment of this application further provides another computing device cluster. For a connection relationship between computing devices in the computing device cluster, refer to a similar connection manner in the computing device clusters in FIG. 11 and FIG. 13. A difference lies in that a memory in one or more computing devices in the computing device cluster may store same instructions for implementing the model inference method.

In some possible implementations, the memory in the one or more computing devices in the computing device cluster may alternatively separately store partial instructions for implementing the model inference method. In other words, a combination of the one or more computing devices may jointly implement the instructions for implementing the model inference method.

Memories of different computing devices in the computing device cluster may store different instructions for implementing partial functions of a model inference system. In other words, the instructions stored in the memories of the different computing devices may implement functions of one or more of the server and the client deployed on the terminal.

The method steps in this embodiment may be implemented in a hardware manner, or may be implemented by executing software instructions by a processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be located in an ASIC. In addition, the ASIC may be located in the computing device. Certainly, the processor and the storage medium may alternatively exist as discrete components in a network device or a terminal device.

This application further provides a chip system. The chip system includes a processor, configured to implement a function of the client and/or the server in the foregoing methods. In a possible design, the chip system further includes a memory, configured to store program instructions and/or data. The chip system may include a chip, or may include a chip and another discrete component.

All or some of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or the instructions are loaded and executed on a computing device, the procedures or the functions in embodiments of this application are all or partially executed. The computing device may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; may be an optical medium, for example, a digital video disc (digital video disc, DVD); or may be a semiconductor medium, for example, a solid state drive (solid state drive, SSD).

The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A model inference method, wherein the method comprises:

   obtaining a first processing result, wherein the first processing result indicates data obtained by a terminal by processing user data by using a first model, and the first model is deployed on the terminal;
   splitting the first processing result to obtain first data and second data;
   receiving a part of model parameters of a second model, and processing the first data based on the part of model parameters, to obtain a second processing result, wherein the second model is deployed on a server;
   sending the second data to the server, and receiving a third processing result sent by the server, wherein the third processing result comprises a result of processing the second data by the server by using the second model; and
   obtaining an inference result based on the second processing result and the third processing result.

2. The method according to claim 1, wherein the first data indicates data related to user inherent information.

3. The method according to claim 1 or 2, wherein
   before sending the second data to the server, the method further comprises:

   selecting, from a plurality of preset encryption algorithms, one or more target encryption algorithms matching the second data; and
   encrypting the second data based on the selected one or more target encryption algorithms, to obtain one or more groups of to-be-transmitted data, wherein each group of to-be-transmitted data comprises a cipher key corresponding to a target encryption algorithm and data corresponding to the cipher key, and the data corresponding to the cipher key is a part of the second data.

4. The method according to any one of claims 1 to 3, wherein
   before obtaining the inference result, the method further comprises:

   sending third data to another device, and receiving a fourth processing result obtained by the another device by processing the third data; and
   obtaining the inference result based on the second processing result and the third processing result comprises:
   outputting the inference result based on the second processing result, the third processing result, and the fourth processing result.

5. The method according to any one of claims 1 to 4, wherein a type of the user data comprises at least one or a combination of text, image, audio, and video.

6. A model inference method, comprising:

   obtaining, by a client, a first processing result, wherein the first processing result indicates data obtained, by a terminal on which the client is located, by processing user data by using a first model, and the first model is deployed on the terminal;
   splitting, by the client, the first processing result to obtain first data and second data;
   sending, by a server, a part of model parameters of a second model to the client, wherein the second model is deployed on the server;
   receiving, by the client, the part of model parameters, and processing the first data based on the part of model parameters, to obtain a second processing result;
   sending, by the client, the second data to the server, and receiving a third processing result sent by the server, wherein the third processing result indicates a result of processing the second data by the server by using the second model; and
   obtaining, by the client, an inference result based on the second processing result and the third processing result.

7. A model inference apparatus, wherein the apparatus comprises:

   a transceiver module, configured to obtain a first processing result, wherein the first processing result indicates data obtained by the apparatus by processing user data by using a first model, and the first model is deployed on the apparatus; and
   a processing module, configured to split the first processing result to obtain first data and second data, wherein the processing module is further configured to: receive a part of model parameters of a second model, and process the first data based on the part of model parameters, to obtain a second processing result, wherein the second model is deployed on a server;
   the transceiver module is further configured to: send the second data to the server, and receive a third processing result sent by the server, wherein the third processing result comprises a result of processing the second data by the server by using the second model; and
   the processing module is further configured to obtain an inference result based on the second processing result and the third processing result.

8. The apparatus according to claim 7, wherein the first data indicates data related to user inherent information.

9. The apparatus according to claim 7 or 8, wherein the apparatus further comprises:

   an encryption module, configured to select, from a plurality of preset encryption algorithms, one or more target encryption algorithms matching the second data, wherein
   the encryption module is further configured to encrypt the second data based on the selected one or more target encryption algorithms, to obtain one or more groups of to-be-transmitted data, wherein each group of to-be-transmitted data comprises a cipher key corresponding to a target encryption algorithm and data corresponding to the cipher key, and the data corresponding to the cipher key is a part of the second data.

10. The apparatus according to any one of claims 7 to 9, wherein

    the transceiver module is further configured to: send third data to another device, and receive a fourth processing result obtained by the another device by processing the third data; and
the processing module is further configured to output the inference result based on the second processing result, the third processing result, and the fourth processing result.

11. The apparatus according to any one of claims 8 to 10, wherein a type of the user data comprises at least one or a combination of text, image, audio, and video.

12. A model inference apparatus, wherein the apparatus comprises:

a transceiver module, used for a client to obtain a first processing result, wherein the first processing result indicates data obtained by the apparatus by processing user data by using a first model, and the first model is deployed on the apparatus; and
a processing module, used for the client to split the first processing result to obtain first data and second data, wherein
the transceiver module is further used for a server to send a part of model parameters of a second model to the client, wherein the second model is deployed on the server;
the transceiver module is further used for the client to receive the part of model parameters, and process the first data based on the part of model parameters, to obtain a second processing result;
the transceiver module is further used for the client to send the second data to the server, and receive a third processing result sent by the server, wherein the third processing result indicates a result of processing the second data by the server by using the second model; and
the processing module is further used for the client to obtain an inference result based on the second processing result and the third processing result.

13. A computing device cluster, comprising at least one computing device, wherein each computing device comprises a processor and a memory; and
a processor of the at least one computing device is configured to implement instructions stored in a memory of the at least one computing device, to enable the computing device cluster to implement the method according to any one of claims 1 to 5, or enable the computing device cluster to implement the method according to claim 6.

14. A computer-readable storage medium, wherein the computer-readable storage medium has computer program instructions stored therein; and
when the computer program instructions are run in a computing device cluster, the computing device cluster is enabled to implement the method according to any one of claims 1 to 5, or the computing device cluster is enabled to implement the method according to claim 6.

15. A computer program product, comprising instructions, wherein when the instructions are run by a computing device cluster, the computing device cluster is enabled to implement the method according to any one of claims 1 to 5, or the computing device cluster is enabled to implement the method according to claim 6.

FIG. 1

FIG. 2

FIG. 3

FIG. 4

Step 1: A client generates a cipher key pair triplet

Step 2: The client splits the cipher key pair triplet

Step 3: The client encrypts first data and second data by using cipher key pair triplets obtained through splitting, and transmits a cipher key for decrypting the second data to a server

FIG. 5

Server

Second model

Safety apparatus

Terminal

First model

Safety apparatus

Inference result

FIG. 6A

FIG. 6B

| Client | Another device | Server |
|---|---|---|

The client processes first data to obtain a second processing result

The client sends third data to the another device

Third data →

The another device receives the third data

The another device processes the third data to obtain a fourth processing result

The client receives the fourth processing result sent by the another device

← Fourth processing result

The another device sends the fourth processing result

The client sends second data to the server

Second data →

The server receives the second data

The server processes the second data by using a second model, to obtain a third processing result

The client receives the third processing result sent by the server

← Third processing result

The server sends the third processing result to the client

FIG. 7

FIG. 8

FIG. 9

FIG. 10

Computing device 1100

Processor 1104

Communication interface 1108

Bus 1102

Memory 1106

Processing module

Transceiver module

Encryption module

FIG. 11

Processor 1104

Communication interface 1108

Bus 1102

Memory 1106

Processing module

Transceiver module

Encryption module

Computing device 1100

FIG. 12

```
┌─────────────────────────────────────┐        ┌─────────────────────────────────────┐
│  ┌──────────┐      ┌──────────────┐  │        │  ┌──────────────┐     ┌──────────┐  │
│  │Processor │      │Communication │  │        │  │Communication │     │Processor │  │
│  │  1104    │      │interface 1108│  │        │  │interface 1108│     │  1104    │  │
│  └────┬─────┘      └──────┬───────┘  │        │  └──────┬───────┘     └────┬─────┘  │
│       │                   │          │        │         │                  │        │
│  ◄────┴───────────────────┴──────►   │        │   ◄─────┴──────────────────┴──►     │
│  )                        │          │ Network │   )             │                  │
│  Bus                      │          │         │   Bus           │                  │
│  1102                ┌────┴─────┐    │         │   1102    ┌─────┴──────────────┐   │
│                      │Memory 106│    │         │           │   Memory 1106      │   │
│                      │ ┌──────┐ │    │         │           │ ┌────────┐┌──────┐ │   │
│                      │ │Proc- │ │ Com-│         │           │ │Transc- ││Encry-│ │Com-│
│                      │ │essing│ │puting│        │           │ │eiver   ││ption │ │puting│
│                      │ │module│ │device│        │           │ │module  ││module│ │device│
│                      │ │ 1010 │ │1100A │        │           │ │ 1020   ││ 1030 │ │1100B │
│                      │ └──────┘ │    │         │           │ └────────┘└──────┘ │   │
│                      └──────────┘    │         │           └────────────────────┘   │
└─────────────────────────────────────┘        └─────────────────────────────────────┘
```

FIG. 13

## INTERNATIONAL SEARCH REPORT

| International application No. |
|---|
| **PCT/CN2024/079441** |

**A. CLASSIFICATION OF SUBJECT MATTER**

G06N5/048(2023.01)i

According to International Patent Classification (IPC) or to both national classification and IPC

**B. FIELDS SEARCHED**

Minimum documentation searched (classification system followed by classification symbols)

IPC:G06N

Documentation searched other than minimum documentation to the extent that such documents are included in the fields searched

Electronic data base consulted during the international search (name of data base and, where practicable, search terms used)

CNABS: CNTXT; VEN; DWPI; EPTXT; WOTXT; USTXT; CNKI; IEEE: 模型, 推理, 获取, 处理, 结果, 终端, 拆分, 参数, 服务端, 发送, model, inference, obtain, process, result, terminal, split, parameter, server, send

**C. DOCUMENTS CONSIDERED TO BE RELEVANT**

| Category* | Citation of document, with indication, where appropriate, of the relevant passages | Relevant to claim No. |
|---|---|---|
| Y | CN 113472830 A (HUAWEI TECHNOLOGIES CO., LTD.) 01 October 2021 (2021-10-01) description, paragraphs 26-32, 137-142 and 197-294, and figure 8 | 1-15 |
| Y | CN 114254751 A (HUAWEI TECHNOLOGIES CO., LTD.) 29 March 2022 (2022-03-29) description, paragraphs 189-254 | 1-15 |
| Y | US 2019318245 A1 (HUAWEI TECHNOLOGIES CO., LTD.) 17 October 2019 (2019-10-17) description, paragraphs 135-218 | 1-15 |
| A | CN 113760551 A (BAIDU ONLINE NETWORK TECHNOLOGY (BEIJING) CO., LTD.) 07 December 2021 (2021-12-07) entire document | 1-15 |
| A | CN 115242416 A (HUAWEI TECHNOLOGIES CO., LTD.) 25 October 2022 (2022-10-25) entire document | 1-15 |

☐ Further documents are listed in the continuation of Box C.      ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **21 May 2024** | **24 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

EP 4 711 986 A1

| Patent document<br>cited in search report | | | Publication date<br>(day/month/year) | Patent family member(s) | | | Publication date<br>(day/month/year) |
|---|---|---|---|---|---|---|---|
| CN | 113472830 | A | 01 October 2021 | CN | 113472830 | B | 10 March 2023 |
| | | | | WO | 2021197144 | A1 | 07 October 2021 |
| CN | 114254751 | A | 29 March 2022 | WO | 2022057510 | A1 | 24 March 2022 |
| | | | | EP | 4202791 | A1 | 28 June 2023 |
| | | | | US | 2023222327 | A1 | 13 July 2023 |
| US | 2019318245 | A1 | 17 October 2019 | EP | 4280112 | A2 | 22 November 2023 |
| | | | | EP | 4280112 | A3 | 14 February 2024 |
| | | | | WO | 2018121282 | A1 | 05 July 2018 |
| | | | | EP | 3557846 | A1 | 23 October 2019 |
| | | | | EP | 3557846 | B1 | 06 September 2023 |
| | | | | US | 11861499 | B2 | 02 January 2024 |
| | | | | FI | 3557846 | T3 | 10 October 2023 |
| | | | | CN | 108243216 | A | 03 July 2018 |
| | | | | CN | 108243216 | B | 14 February 2020 |
| CN | 113760551 | A | 07 December 2021 | WO | 2022057510 | A1 | 24 March 2022 |
| | | | | EP | 4202791 | A1 | 28 June 2023 |
| | | | | US | 2023222327 | A1 | 31 July 2023 |
| CN | 115242416 | A | 25 October 2022 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310680368
- CN 202311028735